# EUROPÄISCHE PATENTSCHRIFT

(11) **EP 1 869 874 B1**
(45) Veröffentlichungstag und Bekanntmachung des Hinweises auf die Patenterteilung: **23.01.2019**
(21) Anmeldenummer: 06721196.1
(22) Anmeldetag: 05.04.2006
(51) Int. Cl.: H04N 1/10

(54) **VORRICHTUNG UND VERFAHREN ZUM OPTISCHEN ERFASSEN UND AUFNEHMEN VON VERBUNDENEN BLÄTTERN**
DEVICE AND METHOD FOR OPTICALLY DETECTING AND RECEIVING INTERCONNECTED SHEETS
DISPOSITIF ET PROCÉDÉ DE SAISIE ET D'ENREGISTREMENT OPTIQUES DE FEUILLES RELIÉES

(30) Priorität: 05.04.2005 AT 5752005
(43) Veröffentlichungstag der Anmeldung: 26.12.2007
(73) Patentinhaber: Tratter, Stephan, 1080 Wien (AT); Zagler, Wolfgang, 1080 Wien (AT); Bauer, Christoph, 7064 Oslip (AT); Barth, Markus, 4160 Aigen (AT)
(72) Erfinder: Tratter, Stephan, 1080 Wien (AT); Zagler, Wolfgang, 1080 Wien (AT); Bauer, Christoph, 7064 Oslip (AT); Barth, Markus, 4160 Aigen (AT)
(74) Vertreter: Sonn & Partner Patentanwälte
(86) Internationale Anmeldenummer: PCT/AT2006/000138
(87) Internationale Veröffentlichungsnummer: WO 2006/105568

(56) Entgegenhaltungen:
- EP-A- 0 779 533
- EP-A- 0 779 534

## Beschreibung

Die Erfindung betrifft eine Vorrichtung zum optischen Erfassen und Aufnehmen, insbesondere zum Digitalisieren von entlang eines Bundes miteinander verbundenen Blättern, insbesondere eines Buches mit einer Auflage- bzw. Befestigungsvorrichtung für die Blätter und einer Aufnahmevorrichtung, die zwei winkelförmig zueinander angeordnete, eine gemeinsame Scheitelkante aufweisende Abbildungsflächen sowie zumindest eine Aufnahmeeinheit umfasst, wobei die Auflage- bzw. Befestigungsvorrichtung und die Aufnahmevorrichtung zueinander relativ beweglich angeordnet sind, so dass die Scheitelkante der Aufnahmevorrichtung und der Bund der Blätter zusammenführbar sind sowie ein Verfahren zum optischen Erfassen und Aufnehmen, insbesondere zum Digitalisieren von entlang eines Bundes miteinander verbundenen Blättern, insbesondere eines Buches, wobei zum Aufnehmen mittels einer Aufnahmevorrichtung, die zwei winkelförmig zueinander angeordnete, eine gemeinsame Scheitelkante aufweisende Abbildungsflächen sowie zumindest eine Aufnahmeeinheit umfasst, die Scheitelkante der Aufnahmevorrichtung und der Bund der Blätter zusammengeführt werden und zum Umblättern die Scheitelkante der Aufnahmevorrichtung vom Bund der Blätter entfernt wird.

Zumeist werden derartige Vorrichtungen bzw. Verfahren als sog. Scan-Vorrichtungen bzw. -Verfahren bezeichnet, wobei dies jedoch eine spezielle Art des Aufnehmens impliziert. Im Zusammenhang mit der vorliegenden Erfindung kann jedoch jede beliebige Art des optischen Erfassens und der Aufnahme insbesondere zur Digitalisierung der aufgenommenen Bilder vorgesehen sein.

Es sind bereits verschiedene Vorrichtungen zum Scannen von ungebundenen Schriften (Einzelblättern) bekannt, mit welchen ein Scanvorgang äußerst effektiv und mit geringem Personalaufwand durchgeführt werden kann.

Das Verarbeiten von gebundenen Werken (Büchern, Heften, Broschüren) ist hingegen mit wesentlich höherem Aufwand verbunden. Bibliotheken und Archive, die bestrebt sind, ihren Bestand digital zu erfassen (OCR oder Faksimile) oder Bücher als Kopie (sei es auf Papier gedruckt oder in digitaler Form) weitergeben wollen (z.B. als Ersatz für die Fernleihe des Originals bzw. zur Anfertigung eines Zweitexemplars zwecks Schonung des Originals) verwenden üblicherweise Auflicht-Buchscanner, bei denen jede einzelne Seite unter der Kamera von Hand aufgeschlagen werden muss, was einen hohen Arbeitsaufwand verursacht und zudem in vielen Fällen der Bindung erheblichen Schaden zuführen kann.

Außer für die systematische Digitalisierung in Bibliotheken und Archiven werden Vorrichtungen zum Digitalisieren von Büchern, sog. Buchscanner, auch noch in verschiedenen Dienstleistungseinrichtungen benötigt, wie beispielsweise auch an Universitäten, um Lehrmaterial für blinde, motorisch behinderte oder dyslexische Studierende in ein alternatives Format (Blindenschrift, synthetische Sprache) umzuformen. Schließlich finden heute einfache Blattwendegeräte als Hilfsmittel für bewegungsbehinderte Personen Anwendung.

Aus der EP 779 533 A1 ist bereits eine Vorrichtung bzw. ein Verfahren der eingangs angeführten Art zum Digitalisieren von Büchern bekannt, wobei jedoch eine externe Vorrichtung mit mehreren Luftausgängen zum Abheben bzw. Umblättern eines obersten Blatts vorgesehen ist. Hierbei wird zunächst ein Luftstrahl zum Separieren der Seiten eingebracht, anschließend ein weiterer Luftstrahl zum Trennen der obersten Seiten von den übrigen Seiten und ein weiterer Luftstrahl, um die obersten Seiten gegen die Abbildungsflächen der winkelförmigen Aufnahme-Vorrichtung zwecks Aufnahme zu drücken. Um ein Lösen von den Abbildungsflächen zu erzielen, ohne hierbei die Seiten zu beschädigen, sind zudem Düsen vorgesehen, über welche Luftstrahlen zwischen die Aufnahme-Vorrichtung und die Seiten eingebracht werden können. Das Separieren eines obersten Blattes von einem Bündel von Blättern mit einer externen Vorrichtung zum Einbringen von Druckluft verlangt somit einen hohen konstruktiven Aufwand und ist zudem fehleranfällig.

Weiters ist aus der EP 779 534 A1 eine Vorrichtung bzw. ein Verfahren zum Digitalisieren von Büchern bekannt, wobei das zu digitalisierende Buch auf einem zwei Tragplatten umfassenden Träger positioniert wird, die entlang einer Schwenkachse zueinander beweglich angeordnet sind. Die Aufnahmevorrichtung umfasst zwei in einem Winkel zueinander angeordnete Abbildungsflächen, wobei die Scheitelkante der beiden Abbildungsflächen zum Digitalisieren zweier Buchseiten im Bereich des Bundes aufgesetzt wird und sodann die Tragplatten derart verschwenkt werden, dass die zu digitalisierenden Seiten auf den Abbildungsflächen anliegen. Nach dem Aufnahmevorgang wird die linear verschiebliche Aufnahmevorrichtung von dem zu digitalisierenden Buch wegbewegt; anschließend wird ein Vakuumöffnungen umfassender Aufnahmearm zu der umzublätternden Seite zugeführt und mit Hilfe einer Schwenkbewegung des Aufnahmearms der Umblättervorgang durchgeführt. Nachteilig ist hiebei nicht nur der hohe konstruktive Aufwand sondern insbesondere, dass der Aufnahmevorgang relativ zeitaufwändig ist, da zunächst die Aufnahmevorrichtung von den zu digitalisierenden Blättern entfernt werden muss, bevor der Umblättervorgang eingeleitet werden kann.

Aus der DE 38 08 429 A1 ist eine Vorrichtung zum Digitalisieren eines mehrblättrigen Druckwerks bekannt, wobei auch hier eine gesonderte Vorrichtung zum Einleiten des Umblättervorgangs, z.B. wie sie von Paperzählmaschine bekannt ist, vorgesehen ist. Die Aufnahme bzw. die Digitalisierung erfolgt erst nachdem das bewegte Blatt seine Endlage erreicht hat. Somit bedarf auch dieser Umblätter- bzw. Aufnahmevorgang einen hohen konstruktiven Aufwand und ist zudem zeitaufwänding.

Aus der DE 200 22 812 U1 ist eine weitere Vorrichtung zum Digitalisieren von Büchern bekannt, bei welcher ebenfalls ein gesonderter Saugmittel umfassender Hebearm vorgesehen ist, der zum Umblättern der Buchseiten bzw. Vereinzeln der obersten Seiten von den restlichen Buchseiten eine Schwenkbewegung durchführt.

Aus der WO 03/078176 A2 ist eine Buchumblättervorrichtung bekannt, bei der ebenfalls ein Saugmittel umfassender Schwenkarm vorgesehen ist, über den die umzublätternde Buchseite mittels Unterdruck angesaugt und auf die andere Seite des Bundes umgelegt wird.

Weiters ist aus der US 5 777 660 A eine Vorrichtung zum Digitalisieren von Büchern bekannt, bei welcher eine Aufnahmevorrichtung mit zwei winkelförmig zueinander, eine gemeinsame Scheitelkante aufweisende Abbildungsflächen vorgesehen sind. Um ein Umblättern des Buches zu ermöglichen, sind zwei horizontal und vertikal verschiebliche Tragflächen vorgesehen, wobei jedoch nicht näher ausgeführt wird, wie die einzelnen Seiten des Buches umgeschlagen werden.

Weiters ist noch aus der US 4 633 080 A ebenfalls eine Vorrichtung zum Digitalisieren von Büchern mit einer eine Scheitelkante aufweisende Aufnahmevorrichtung bekannt, wobei zumindest eine an der Scheitelkante anschließende Fläche eine durchsichtige Scheibe aufweist, an welche die zu scannende Seite herangeführt wird. Wie ein Umblättern bzw. Vereinzeln der obersten Blätter von den übrigen Blättern des Buches erzielt wird, ist in der US-Schrift jedoch nicht geoffenbart.

Ziel der vorliegenden Erfindung ist es demzufolge eine konstruktiv einfache Vorrichtung zu schaffen, mit welcher insbesondere das Umblättern bzw. Vereinzeln eines obersten Blattes bzw. von obersten Blättern eines aufgeschlagenen Buches von den übrigen Blättern auf einfache Weise erzielt wird. Weiters soll ein Verfahren geschaffen werden, bei dem zugleich mit der Relativbewegung zwischen Aufnahmevorrichtung und den aufzunehmenden Blättern bereits ein Umblättervorgang eingeleitet wird.

Dies wird mit der Vorrichtung der eingangs angeführten Art dadurch erzielt, dass die Aufnahmevorrichtung Anziehmittel in Form zumindest einer Öffnung zum Ansaugen mindestens eines Blattes und zur Mitnahme mindestens eines Blattes beim Entfernen der Scheitelkante der Aufnahmevorrichtung vom Bund der Blätter aufweist.

Durch das Vorsehen derartiger Anziehmittel zum Mitnehmen zumindest eines Blattes des Bündels während die Scheitelkante und der Bund voneinander entfernt werden kann beim Entfernen der Scheitelkante der Aufnahmevorrichtung vom Bund der Blätter zugleich das mit Hilfe der Anziehmittel mitgenommene Blatt von den übrigen Blättern vereinzelt werden und somit bereits im Zuge dieser Relativbewegung zwischen der Aufnahmevorrichtung und dem Blätterbündel der Umblättervorgang eingeleitet werden. Hieraus ergibt sich nicht nur eine konstruktiv einfache Vorrichtung zum Vereinzeln der Blätter von den übrigen Blättern des Bundes, sondern zudem auch eine gegenüber bekannten Vorrichtungen vergleichsweise schnelle Vorrichtung zum Aufnehmen und Umblättern, da bereits simultan mit der Relativbewegung zwischen Aufnahmevorrichtung und dem zu erfassenden Bündel an Blättern der Umblättervorgang eingeleitet wird. Vorteilhafterweise kann der gesamte Aufnahmevorgang während dieser Relativbewegung durchgeführt werden, da die über die Anziehmittel mitgenommenen Blätter auf den Abbildungsflächen der Aufnahmevorrichtung zumindest teilweise flächig aufliegen. Die Anziehmittel können hierbei eine beliebige Art der Anziehungskraft auf mindestens ein Blatt des Bündels zu dessen Mitnahme ausüben, wobei dies insbesondere eine Saugkraft oder auch eine elektrostatische Kraft sein kann. Bei der vorgesehenen Öffnung zum Ansaugen mindestens eines Blattes kann über diese Öffnung auf einfache Weise ein Unterdruck aufgebracht werden, über den zumindest ein oberstes Blatt des Bündels angesaugt wird und während der Relativbewegung zwischen der Aufnahmevorrichtung und dem Bund der Blätter mit der Aufnahmevorrichtung mitgenommen wird.

Wenn zumindest eine Öffnung zum Ansaugen mindestens eines Blattes im Bereich der Scheitelkante der Abbildungsflächen angeordnet ist, wird zuverlässig jeweils ein Blatt beidseits des Bundes von der Aufnahmevorrichtung durch das Aufbringen eines Unterdrucks erfasst, so dass bei der Relativbewegung zwischen Aufnahmevorrichtung und dem Bund der Blätter die zumindest in diesem Teilbereich an der Aufnahmevorrichtung aufliegenden Blätter digitalisiert werden können.

Um die angesaugten, obersten Blätter des Bündels an Blättern während der Relativbewegung zwischen der Aufnahmevorrichtung und dem Bund der Blätter zuverlässig in einer an den Abbildungsflächen aufliegenden Stellung zu halten, ist es günstig, wenn weitere auf den Abbildungsflächen verteilt angeordnete Öffnungen zum Ansaugen mindestens eines Blattes vorgesehen sind.

Hinsichtlich einer konstruktiv einfachen zweckmäßigen Relativbewegung zwischen der Aufnahmevorrichtung und dem Bündel an Blättern ist es von Vorteil, wenn die Aufnahmevorrichtung linear verschieblich angetrieben ist.

Wenn die Auflage- bzw. Befestigungsvorrichtung zwei winkelförmig zueinander angeordnete Platten, die vorzugsweise einen Winkel zwischen 50 und 110° einschließen, aufweist, kann die Aufnahmevorrichtung mit ihrer Scheitelkante zuverlässig zum Bund der Blätter zugeführt werden; vorteilhafterweise muss somit das Bündel an Blättern nicht in eine 180°-Winkel einschließende Öffnungsstellung aufgeschlagen werden, bei welcher häufig die Bindung eines Buches beschädigt wird.

Um auch lose Blätter mit der erfindungsgemäßen Vorrichtung digitalisieren zu können, ist es günstig, wenn den Platten eine Einspannvorichtung zum Einspannen loser Blätter zugeordnet ist, die im eingespannten Zustand durch einen Schlitz zwischen den beiden Platten hindurchgeführt sind.

Wenn die Auflage- bzw. Befestigungsvorrichtung an einem senkrecht zur Bewegungsrichtung der Aufnahmevorrichtung verschieblichen Schlitten befestigt ist, ergibt sich während des Heranführens der Scheitelkante der Aufnahmevorrichtung an den Bund der Blätter eine Selbstjustierung der Auflage- bzw. Befestigungsvorrichtung, so dass die linear verschiebliche Aufnahmevorrichtung zuverlässig mit ihrer Scheitelkante mit dem Bund der Blätter zusammenführbar ist.

Wenn die Aufnahmevorrichtung ein im Wesentlichen geschlossenes Gehäuse aufweist, dessen Wandflächen zumindest teilweise von den Abbildungsflächen gebildet werden, wobei zumindest eine Anschlussöffnung für eine Saug- bzw. Druckleitung vorgesehen ist, kann auf einfache Weise ein Unterdruck zum Ansaugen der aufzunehmenden Blätter erzeugt werden; ebenso kann auf einfache Weise ein Überdruck beim Annähern der Scheitelkante der Aufnahmevorrichtung an den Bund erzeugt werden, um zu gewährleisten, dass die Blätter plan aufeinander aufliegen.

Sofern mehrere Blätter von dem Bund mit Hilfe der Luftöffnungen angesaugt werden, ist es günstig, wenn in seitlichen Wandflächen des Gehäuses zumindest jeweils eine verschwenkbare Klappe mit einer Luftöffnung vorgesehen ist. Hiermit können die an den Abbildungsflächen anliegenden, bereits erfassten Blätter von den übrigen angesaugten Blättern über ein Einwärtsschwenken der Klappen getrennt werden, und somit nur ein Umlegen von bereits erfassten Blättern sichergestellt werden.

Zum Erfassen und Aufnehmen der Blätter ist es günstig, wenn als Aufnahmeeinrichtung zumindest eine Digital- und/oder Zeilenkamera vorgesehen ist.

Um eine besonders hohe Bildqualität bei einer zugleich vergleichsweise geringen Anzahl an Digitalkameras zu erzielen, ist es von Vorteil, wenn beidseits der Scheitelkante jeweils ein optisches Glasprisma vorgesehen ist, wobei den beiden Glasprismen eine einzige Reihe von Digitalkameras zum Digitalisieren der in den Glasprismen umgelenkten Bilder zugeordnet ist. Zudem kann durch die unmittelbar an die Scheitelkante anschließenden Glasprismen zuverlässig auch eine Aufnahme von Büchern mit einem sehr niedrigen Steg von bis zu ca. 3 mm erzielt werden.

Um an beiden Abbildungsflächen zugleich ein Bild aufnehmen zu können, ist es alternativ jedoch auch möglich, dass den beiden Abbildungsflächen je eine Digitalkamera zugeordnet ist. Wenn jeder Abbildungsfläche mehrere Digitalkameras zugeordnet sind, kann im Vergleich zu lediglich einer Digitalkamera pro Abbildungsfläche eine höhere Aufnahmequalität erzielt werden und zudem zugleich die Kosten relativ gering gehalten werden.

Hierbei ist es einerseits möglich, dass die Aufnahmefelder der Digitalkameras jeweils eine gesamte Abbildungsfläche abdecken, wobei die Digitalkameras, insbesondere 3 oder 4 Digitalkameras, derart angeordnet sind, dass sich ihre Aufnahmefelder geringfügig überlappen. Durch die überlappende Anordnung der Aufnahmefelder können die digitalisierten Bilder anschließend auf einfache Weise zu einem Gesamtbild zusammengesetzt werden (sog. Stitching). Alternativ ist es auch möglich, dass die Aufnahmefelder der Digitalkameras nicht die gesamte Abbildungsfläche abdecken, wobei in den zwischen den Aufnahmefeldern liegenden Abschnitten der Abbildungsflächen Luftöffnungen vorgesehen sein können. Hierbei sind die erzielten Datenströme wesentlich kleiner, da nur Teilaufnahmen durchgeführt werden. Zudem haben die Digitalkameras ausreichend Zeit die aufgenommenen Daten zu verarbeiten und abzuspeichern ehe ein nächster Arbeitsschritt erfolgt.

Alternativ zu den vorstehend genannten Digitalkameras ist es ebenso möglich, dass als Aufnahmeeinrichtung zumindest ein Aufnahme-Balken bestehend aus CIS (Compact Image Sensor)- oder CCD(Charges Coupled Device)-Modulen vorgesehen ist. Ein CIS-Modul ist hierbei eine Kombination aus einer CMOS(Complementary Metal Oxid Semiconductor)-Sensorreihe, einer Linearoptik und einer LED-Beleuchtung. CCD-Module sind Halbleiterbausteine, die ähnlich wie die menschliche Netzhaut aus einer Vielzahl lichtempfindlicher Zellen bestehen. Die Zellen wandeln das Licht in elektrische Ladung um, die als digitaler Wert ausgelesen wird. Aus dieser Zellenvielfalt ergibt sich ein digitales Rasterbild. Je höher die Anzahl der Zellen (Auflösung), desto feiner wird das Bild.

Das Verfahren der eingangs angeführten Art ist dadurch gekennzeichnet, dass über die Aufnahmevorrichtung zumindest ein Blatt mittels einer Anziehungskraft mitgenommen wird, so dass beim Entfernen der Scheitelkante der Aufnahmevorrichtung vom Bund der Blätter zumindest ein Blatt von den übrigen Blättern vereinzelt wird. Wie bereits im Zusammenhang mit der vorstehend erläuterten Vorrichtung beschrieben, kann durch das Aufbringen einer Anziehungskraft, z.B. einer Saugkraft oder einer elektrostatischen Kraft, bereits beim Entfernen der Aufnahmevorrichtung vom Bund der Blätter zugleich der Umblättervorgang durch das Vereinzeln zumindest eines obersten Blattes von den übrigen Blättern eingeleitet werden, so dass die gebündelten Blätter auf besonders einfache und schnelle Weise erfasst und aufgenommen werden können. Zwecks Vermeidung von Wiederholungen wird hinsichtlich der weiteren Vorteile auf vorstehende Ausführungen verwiesen.

Hinsichtlich einer zuverlässigen Kontrolle der Anziehungskraft, so dass nach Möglichkeit beim Entfernen der Aufnahmevorrichtung vom Bund der Blätter nicht mehrere Blätter von einer Seite des Bundes mitgenommen werden, ist es günstig, wenn das Blatt beim Entfernen der Scheitelkante der Aufnahmevorrichtung vom Bund der Blätter angesaugt wird.

Um ein simultanes Erfassen und Aufnehmen zweier beidseits des Bundes angeordneter Blätter beim Entfernen der Scheitelkante der Aufnahmevorrichtung vom Bund der Blätter zu ermöglichen, ist es günstig, wenn jeweils ein Blatt beidseits des Bundes beim Entfernen der Scheitelkante der Aufnahmevorrichtung vom Bund der Blätter von den übrigen Blättern vereinzelt wird.

Zwecks eines möglichst schnellen effizienten Aufnahmeverfahrens ist es günstig, wenn während des Entfernens der Scheitelkante der Aufnahmevorrichtung vom Bund der Blätter die mitgenommenen Blätter optisch erfasst und aufgenommen, insbesondere digitalisiert, werden.

Um auf einfache Weise die mit Hilfe der Aufnahmevorrichtung vereinzelten Blätter umzulegen, so dass noch nicht erfasste Blätter zu oberst auf dem Bündel aufliegen, ist es günstig, wenn die vereinzelten Blätter mittels eines Luftstoßes gemeinsam auf eine Seite des Bundes umgelegt werden. Alternativ könnte jedoch auch ein schwenkbarer Umlegearm zum Umlegen der bereits von den übrigen Blättern vereinzelten Blättern vorgesehen sein.

Wenn während der Annäherung der Scheitelkante der Aufnahmevorrichtung an den Bund der Blätter aus Löchern in den Abbildungsflächen ein Luftstrom ausgeblasen wird, ist durch die ausgeblasene Luft zuverlässig gewährleistet, dass die obersten Blätter des Bündels plan aufliegen, so dass diese nicht beschädigt werden und zudem aufgrund einer etwaigen Faltenbildung keine Unregelmäßigkeiten beim Aufnahmevorgang auftreten.

Die Erfindung wird nachstehend anhand von in der Zeichnung dargestellten bevorzugten Ausführungsbeispielen, auf die sie jedoch nicht beschränkt sein soll, noch näher erläutert. Im Einzelnen zeigen in der Zeichnung:
Fig. 1 schematisch eine perspektivische Ansicht einer Aufnahmevorrichtung mit einer linearen Antriebseinheit;
Fig. 2 im Detail eine Ansicht einer Buchauflagevorrichtung; Fig. 2a eine Einspannvorrichtung zum Bündeln loser Blätter;
Fig. 3 eine Ansicht, in welcher eine Scheitelkante der winkelförmigen Aufnahmevorrichtung und ein Bund eines zu digitalisierenden Buches zusammengeführt sind;
Fig. 3a eine teilweise aufgebrochene Ansicht gemäß Fig. 3;
Fig. 4 eine Ansicht während die Aufnahmevorrichtung vom Bund der Blätter entfernt wird;
Fig. 4a eine teilweise aufgebrochene Ansicht gemäß Fig. 4;
Fig. 5 eine teilweise aufgebrochene perspektivische Ansicht gemäß den Figuren 4 und 4a;
Fig. 6 eine Seitenansicht der Aufnahmevorrichtung;
Fig. 7 eine weitere Ansicht der Aufnahmevorrichtung in ihrer Hochfahrbewegung kurz bevor der Kontakt zu den angesaugten Blättern verloren geht;
Fig. 8 eine Ansicht nach dem zwei Blätter eines Buches vereinzelt wurden und ein Luftstoß zum Umlegen der Blätter eingebracht wird;
Fig. 9 eine Ansicht während die Aufnahmevorrichtung an das Buch angenähert wird;
Fig. 10 eine perspektivische Ansicht einer Aufnahmevorrichtung mit verschwenkbaren Klappen;
Fig. 11 eine Ansicht der Aufnahmevorrichtung gemäß Fig. 10 mit abgenommener Front-Wandfläche; und
Fig. 12 eine Ansicht der Aufnahmevorrichtung gemäß Fig. 11 mit eingeschwenkten Klappen.

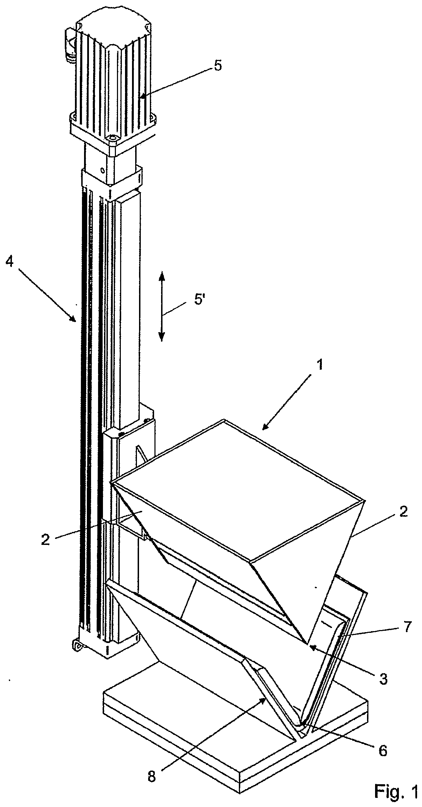

In Fig. 1 ist eine Aufnahmevorrichtung 1 ersichtlich, die zwei winkelförmig zueinander angeordnete Abbildungsflächen 2 mit einer gemeinsamen Scheitelkante 3 aufweist.

Die Aufnahmevorrichtung 1 ist an einer Lineareinheit 4 gelagert, an welche sie mit Hilfe eines Antriebsmotors 5 verschiebbar angeordnet ist. Mit Hilfe des Antriebsmotors 5 kann die Aufnahmevorrichtung 1 somit mit ihrer Scheitelkante 3 in Richtung eines Bundes 6 eines Buches 7 angenähert bzw. von dem Bund 6 wegbewegt werden.

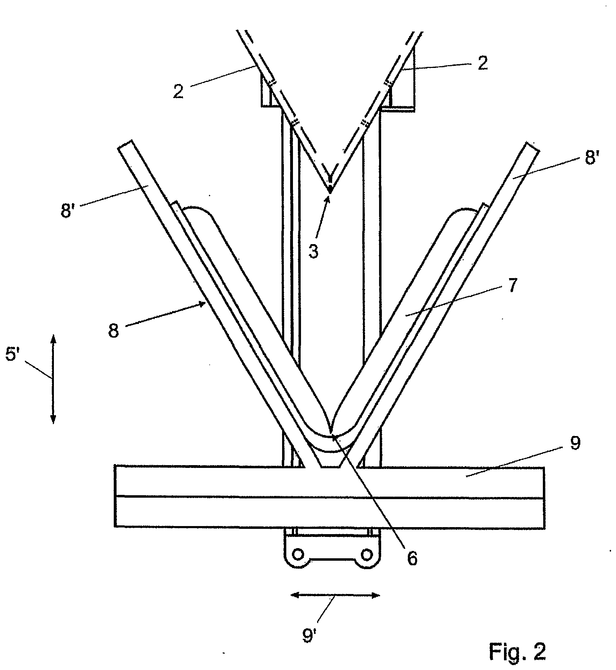

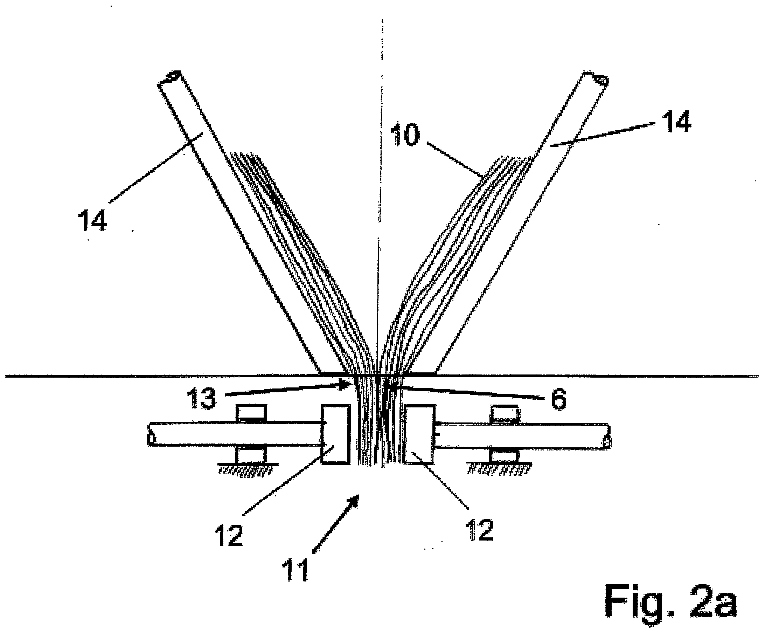

Wie insbesondere in Fig. 2 ersichtlich, liegt das Buch 7 auf einer winkelförmigen Auflagevorrichtung 8 mit zwei Platten 8' auf, die mit Hilfe eines Schlittens 9 senkrecht zu der Bewegungsrichtung 5' der Lineareinheit 5 auf dem Schlitten 9 in Pfeilrichtung 9' verschieblich gelagert ist. Der Öffnungswinkel der Auflagevorrichtung 8 kann hierbei zwischen einem Winkel von ca. 50 - 110°, abhängig von dem zu digitalisierenden Buch eingestellt werden, wobei jedoch mit Hilfe des horizontal verschieblichen Schlittens 9 während des Digitalisierungsvorgangs die Scheitelkante 3 der Aufnahmevorrichtung 1 zuverlässig im Bereich des Bundes 6 ohne eine externe Einstellung zur Auflage kommt.

Wie aus Fig. 2a ersichtlich, können mit der erfindungsgemäßen Vorrichtung auch lose Blätter 10 digitalisiert werden, wobei diese dann in der in Fig. 2a gezeigten Einspannvorrichtung 11 mit Hilfe von zwei Einspannbacken 12 entlang eines Bundes 6 miteinander verbunden werden und durch eine Durchgangsöffnung 13 von zwei als Auflage vorgesehenen Platten 14 hindurchgeführt werden, so dass die losen Blätter 10 in der Einspannvorrichtung 11 in der Art eines gebundenen Buches vorliegen.

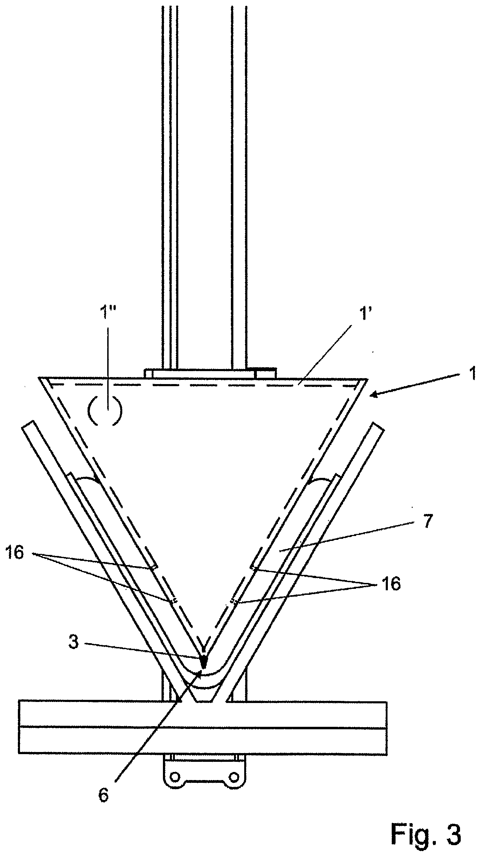

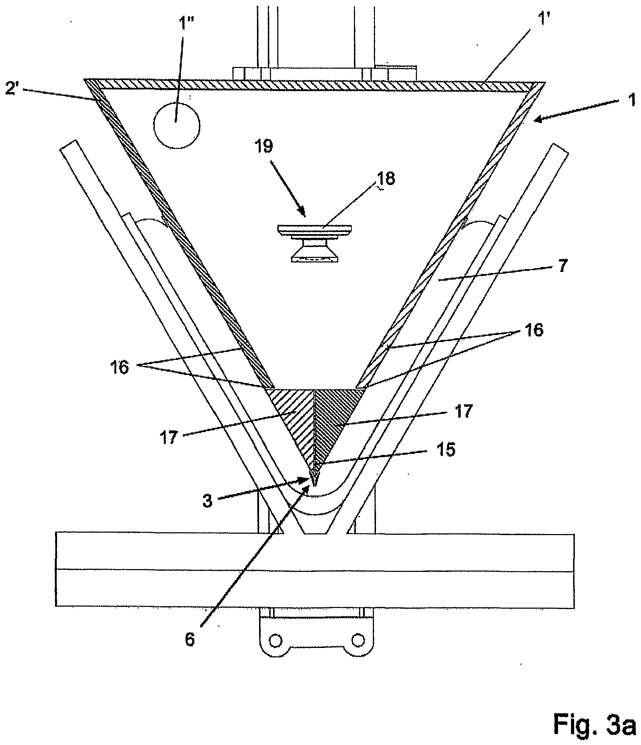

In Fig. 3 ist die Aufnahmevorrichtung 1 im Detail in ihrer untersten Position gezeigt, in welche die Scheitelkante 3 der im wesentlichen prismenförmigen Aufnahmevorrichtung 1 auf dem Bund 6 des zu digitalisierenden Buches 7 im Wesentlichen aufliegt. In der entsprechenden Ansicht in Fig. 3a, in welcher jedoch die Aufnahmevorrichtung 1 im Schnitt gezeigt ist, ist insbesondere ersichtlich, dass die Aufnahmevorrichtung 1 im Bereich der Scheitelkante 3 eine sich im Wesentlichen über die gesamte Länge der Scheitelkante 3 erstreckende Luftöffnung 15 aufweist, an welche die Abbildungsflächen 2 anschließen. Anstelle eines derartigen durchgehenden Luftschlitzes kann selbstverständlich auch eine Vielzahl kleinerer Luftöffnungen vorgesehen sein.

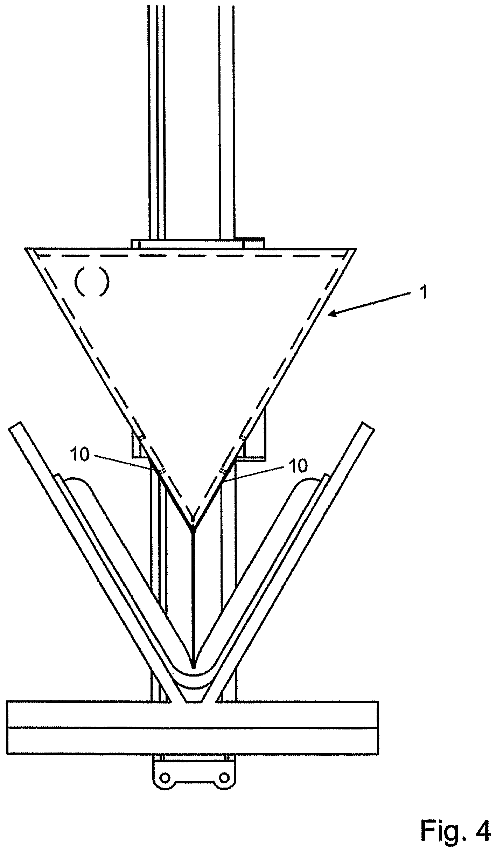

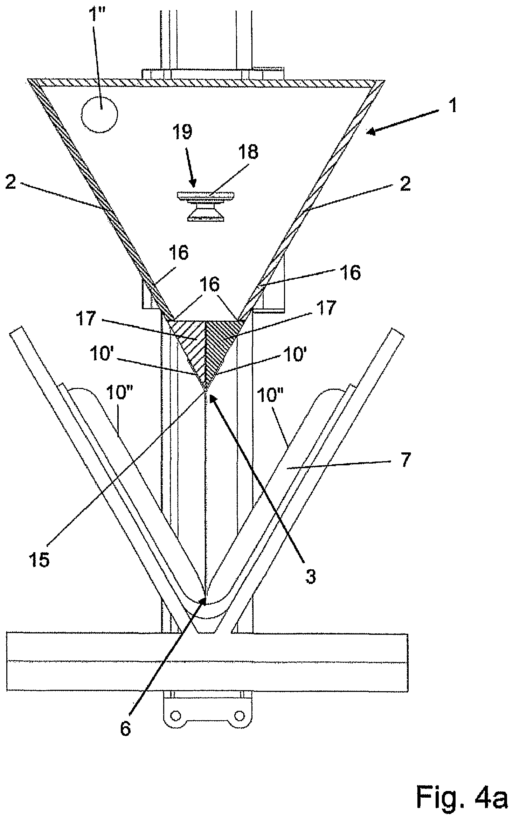

Zudem ist in Fig. 3a ersichtlich, dass benachbart der entlang der Scheitelkante 3 verlaufenden Luftöffnung 15 jeweils ein Glasprisma 17 angeordnet ist. Mit Hilfe dieser geschliffenen Glasprismen 17 wird jeweils ein Streifen eines obersten Blatts 10' (vgl. Fig. 4) in das Innere der Aufnahmevorrichtung 1 verzerrungsfrei projeziert. Zwischen den beiden Glasprismen 17 verbleibt jedoch ein Spalt, über welchen die über die Luftöffnung 15 im Bereich der Scheitelkante 3 angesaugte Luft durchtreten kann.

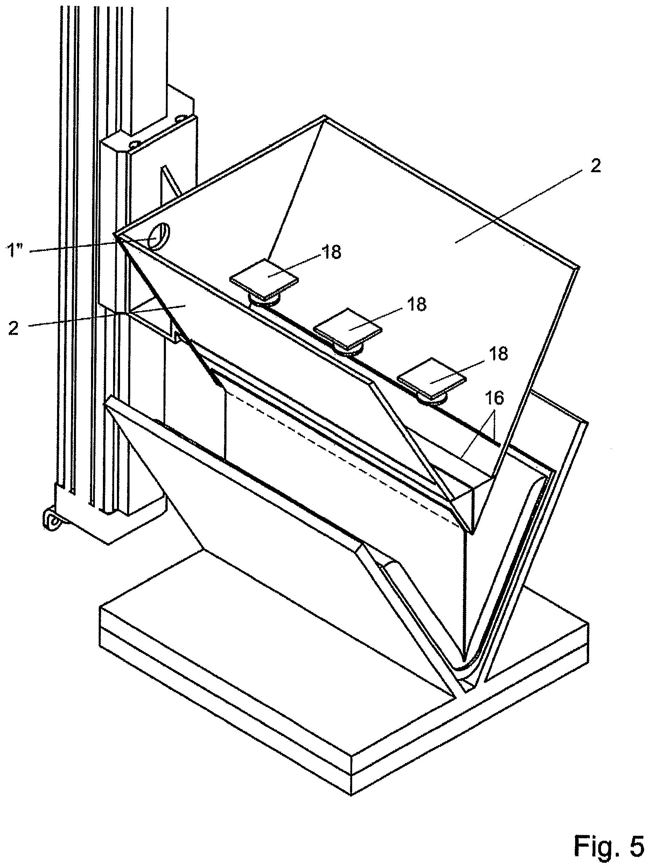

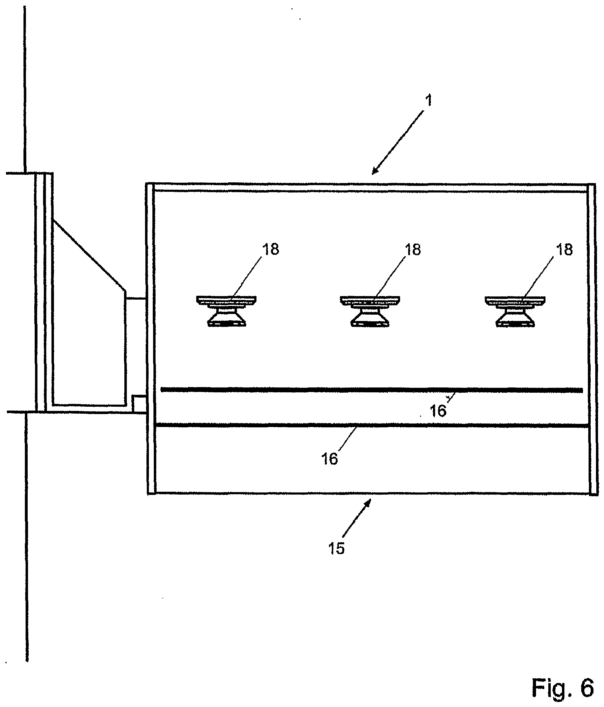

Wie weiters in Fig. 3a und insbesondere auch in den Figuren 5 und 6 ersichtlich, ist den beiden optischen Glasprismen 17 eine einzige Reihe Digitalkameras 18 als Aufnahmeeinheit 19 zugeordnet, welche beide Projektionen an den oberen Flächen der Glasprismen 17 zugleich aufnimmt. Da somit nur relativ schmale Streifen Bildinformationen von den obersten Blättern 10' aufgenommen werden, ist die Bildverarbeitung vergleichsweise einfach, wobei die beiden Streifen aus den gemachten Bildern mittels Software herausisoliert und abgespeichert werden.

Hiebei überlappen die Aufnahmefelder der Digitalkameras 18 einander teilweise, so dass die Teilbilder sodann mit Hilfe einer Software (sog. Stitching-Programm) zu einer Seite zusammengesetzt und weiterverarbeitet werden können. Die Digitalisierung erfolgt bei diesem Ausführungsbeispiel somit während des laufenden Umblättervorgangs, d.h. während die Aufnahmevorrichtung 1 nach oben verfährt. Hierbei machen die Digitalkameras 18 schrittweise Aufnahmen von den projezierten Bildern von den optischen Prismen 17 und leiten diese Aufnahme an einen Computer weiter, wo diese dann verarbeitet werden. Aufgrund der optischen Projektion mit Hilfe der Glasprismen 17 kann somit mit einer einzigen Reihe an Digitalkameras 18 eine vergleichsweise hohe Bildqualität von ca. 600 bis 1.200 dpi erzielt werden. Darüber hinaus können die Glasprismen 17, wie insbesondere aus Fig. 3a ersichtlich, unmittelbar an die Luftöffnung 15 im Bereich der Scheitelkante 3 der Aufnahmevorrichtung 1 anschließen, so dass die obersten Blätter 10' des Buches 7 bereits in einem sehr geringen Abstand vom Bund von ca. 3 mm digitalisiert werden können. Die an die Glasprismen 17 anschließenden seitlichen Wandflächen 2' der Abbildungsflächen 2 können beispielsweise aus Glas oder Kunststoff bestehen.

In den seitlichen Wandflächen 2' sind hierbei weitere Luftöffnungen 16 vorgesehen, um die angesaugten obersten Blätter 10' des Buches 7 beim Hochfahren der Aufnahmevorrichtung 1 zuverlässig in einer an den Glasprismen 17 anliegenden Stellung zu halten.

Weiters ist in der Rückwand der im Wesentlichen als geschlossenes Gehäuse 1' ausgebildeten Aufnahmevorrichtung 1 noch eine Öffnung 1" ersichtlich, an welche ein Saug- bzw. Druckleitung zum Einbringen bzw. Absaugen eines Lufstroms angeschlossen werden kann.

In den Figuren 4 und 4a ist die Aufnahmevorrichtung 1 in einer gegenüber Fig. 3 nach oben verfahrenen Position gezeigt, wobei ersichtlich ist, dass die obersten Blätter 10' des Buches 7 mit Hilfe der im Bereich der Scheitelkante angeordneten Luftöffnung 15 bzw. der in den Abbildungsflächen 2 angeordneten Luftöffnungen 16 beim Hochfahren der Aufnahmevorrichtung 1 von den übrigen Blättern 10" des Buches 10 vereinzelt werden und somit bereits beim Hochfahren der Aufnahmevorrichtung zugleich der Umblättervorgang eingeleitet wird, wodurch der Zeitaufwand für das Digitalisieren des Buches 7 gegenüber bekannten Vorrichtungen bzw. Verfahren wesentlich reduziert werden kann.

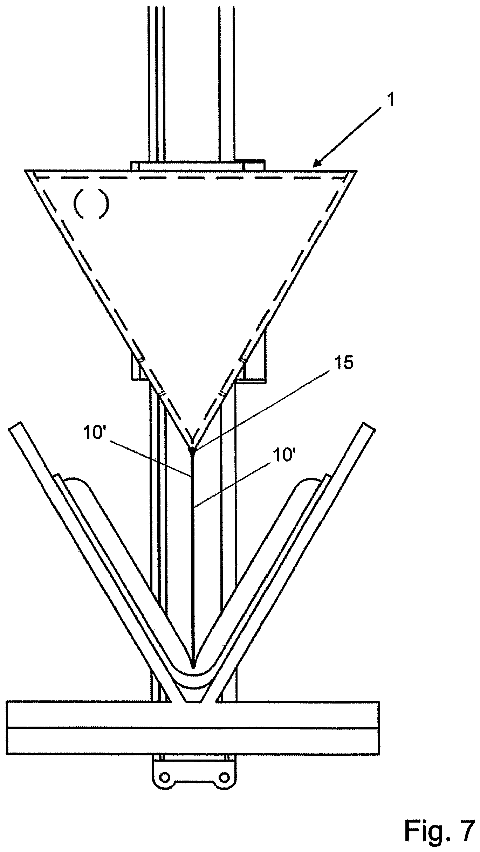

In Fig. 7 ist die Aufnahmevorrichtung 1 sodann in einer weiter nach oben verfahrenen Stellung gezeigt, wobei nach wie vor über die im Bereich der Scheitelkante 3 vorgesehene Luftöffnung 15 die obersten Blätter 10' des Buches an die Abbildungsflächen 2 der Aufnahmevorrichtung 1 angesaugt werden.

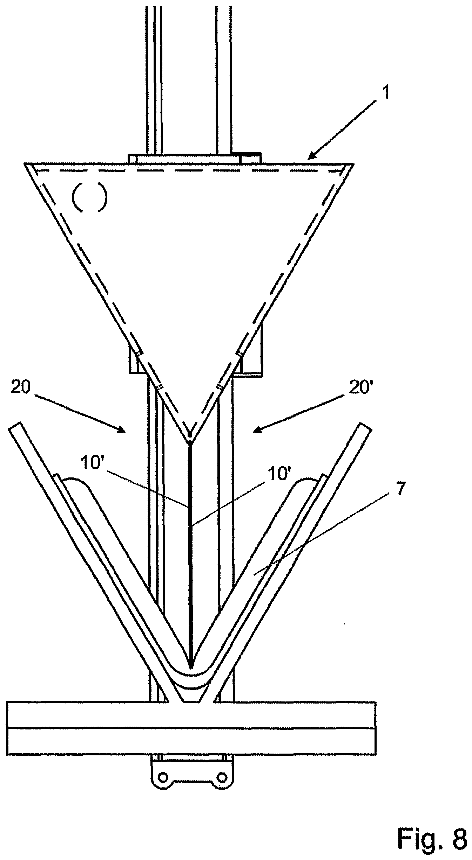

Wie aus Fig. 8 ersichtlich, lösen sich beim weiteren Verfahren der Aufnahmevorrichtung 1 nach oben die angesaugten Blätter 10' von der Aufnahmevorrichtung 1, so dass die Luftöffnungen 15 nun frei liegen. Durch den plötzlichen Abfall des Ansaugdrucks erkennt eine Steuereinrichtung auf einfache Weise, dass nun die Blätter 10' freigegeben sind und es wird somit der Umblättervorgang durch Einbringen eines seitlichen Luftstroms in Pfeilrichtung 20 oder 20' zum Umlegen der nunmehr digitalisierten Blätter 10' in die gewünschte Richtung vollendet, wobei hierzu beispielsweise in den frei auskragenden Endbereichen der Platten 8' Luftaustrittsöffnungen vorgesehen sein können. Alternativ zu der Erkennung aufgrund des abrupten Druckabfalls kann die Steuereinrichtung auch durch das Erkennen eines oberen weißen Randes angesteuert werden bzw. anstelle des Einbringens eines seitlichen Luftstroms auch ein mechanischer Umlegefinger vorgesehen sein.

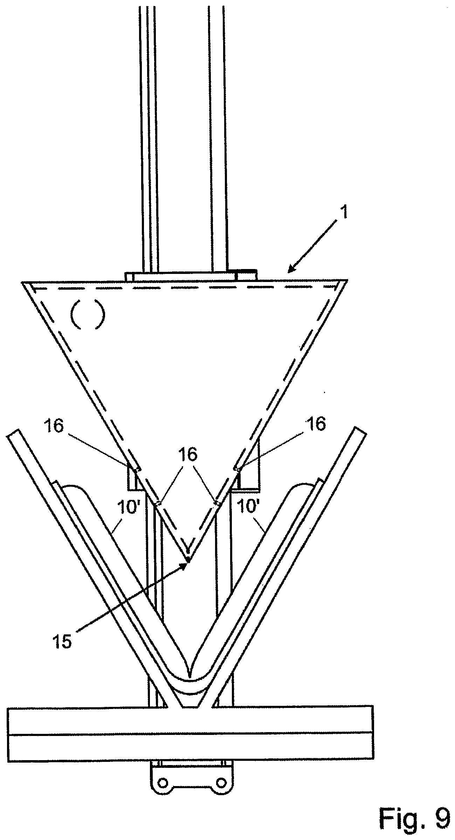

In Fig. 9 ist die Einleitung eines weiteren Umblätter- bzw. Digitalisierungsvorgangs ersichtlich, wobei hier über die Luftöffnungen 16 beim Annähern der Scheitelkante 3 der Aufnahmevorrichtung 1 an den Bund 6 des Buches 7 über die Luftöffnungen 16 ein Luftstrom ausgeblasen werden kann, um beim Herunterfahren der Aufnahmevorrichtung 1 sicherzustellen, dass die obersten Blätter 10' des Buches 7 auf den restlichen Blättern 10" plan aufliegen. Hierbei ist es günstig, wenn der Luftstrom im Bereich der Scheitelkante 3 der Aufnahmevorrichtung 1 am stärksten ist und zu der Außenkante der Abbildungsflächen 2 hin kontinuierlich abnimmt.

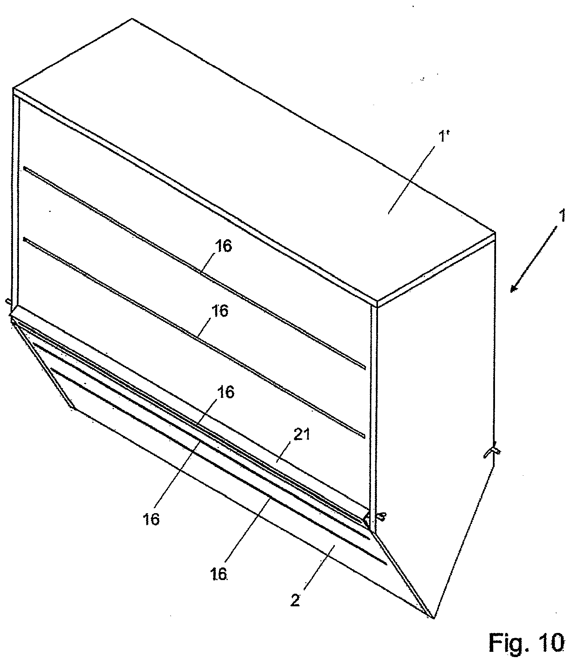

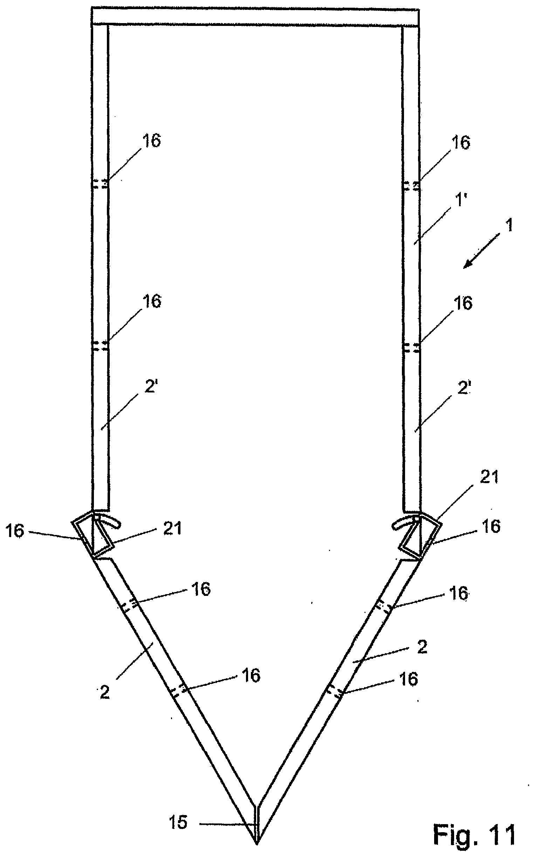

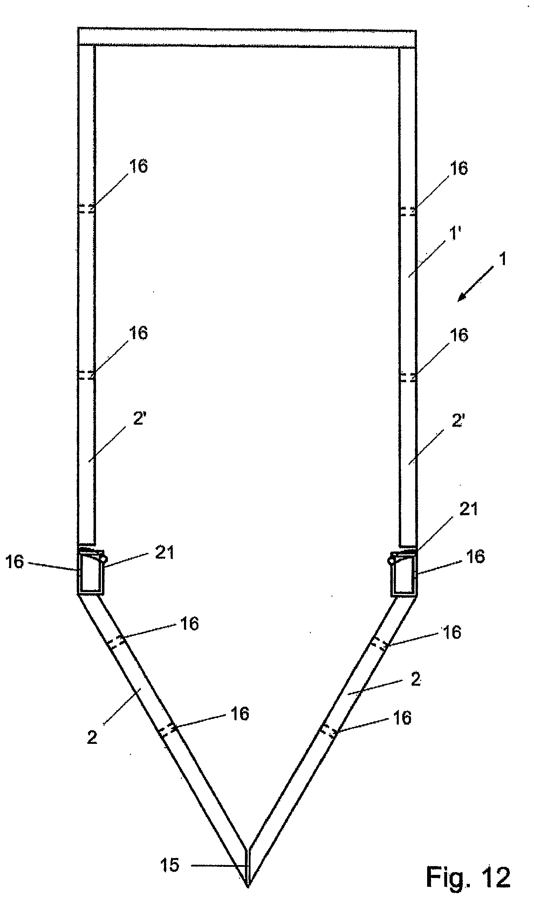

In den Fig. 10 bis 12 ist ein alternatives Ausführungsbeispiel der Aufnahmevorrichtung 1 gezeigt, bei dem das Gehäuse 1' schräg zueinander angeordnete Wand- bzw. Abbildungsflächen 2 aufweist, an welche parallel zueinander verlaufende Wandflächen 2' anschließen. Zwischen den beiden Wandflächen 2, 2' sind verschwenkbare Klappen 21 mit Luftöffnungen 16 angeordnet. In der auf dem Bund 3 aufgesetzten Stellung der Aufnahmevorrichtung 1 sind die Klappen 21 zunächst in ihrer in Fig. 11 gezeigten auswärts geschwenkten Stellung angeordnet. Sofern jedoch über die Luftöffnungen 15, 16 mehr als jeweils ein oberstes Blatt 10' des Bündels an Blätter angesaugt werden sollte, wird beim Einschwenken der Klappen 21 in die in Fig. 12 gezeigte Stellung zuverlässig jeweils lediglich ein einziges Blatt 10' an der Aufnahmevorrichtung 1 gehalten, so dass die übrigen angesaugten Blätter auf einfache Weise von den obersten zu digitalisierenden Blättern 10' getrennt werden können. In den Fig. 10 bis 12 ist keine Aufnahmeeinheit 19 gezeigt, wobei jedoch selbstverständlich zum Digitalisieren der Blätter 10' auch hier eine entsprechende Aufnahmeeinheit 19 vorzusehen ist.

Alternativ zu der vorstehend beschriebenen Aufnahmeeinheit 19 können auch lediglich zwei hochauflösende Digitalkameras vorgesehen sein, deren Aufnahmefeld jeweils genau einer Abbildungsfläche 2 entspricht. Die Abbildungsflächen 2 bestehen hierbei aus einem lichtdurchlässigen Material, z.B. aus einem bruchfesten Glasacryl oder Polycarbonat. Derartige Digitalkameras können in unterschiedlichem Abstand zu den Abbildungsflächen positioniert werden, so dass die Auflösung der Digitalaufnahmen an die Größe der Blätter angepasst werden kann.

Weiters ist es alternativ auch möglich, ein Array von beispielsweise 3x3 oder 4x3 Digitalkameras 18 jeweils einer einzigen Abbildungsfläche 2 zuzuordnen.

Da in den vorstehend genannten Fällen die gesamten Abbildungsflächen 2 von den Aufnahmefeldern der Digitalkameras 18 erfasst werden, kann die gesamte Buchseite bereits in der untersten Stellung der Aufnahmevorrichtung 1 digitalisiert werden und während des Hochfahrens der Aufnahmevorrichtung 1, mit welcher gleichzeitig der Umblättervorgang eingeleitet wird, können die ermittelten Daten verarbeitet werden.

Es ist jedoch auch denkbar, dass jeder Abbildungsfläche 2 jeweils nur eine geringere Anzahl an Digitalkameramodulen, welche pro Modul ca. drei bis vier Digitalkameras umfasst, zugeordnet sind. Hierbei wird dann in einer untersten Ausgangsposition der Abbildungsvorrichtung 1 zunächst nur jeweils ein Streifen des zu digitalisierenden Blattes 10' aufgenommen und nach dem Hochfahren der Aufnahmevorrichtung 1 ein weiterer Streifen mit Hilfe der Digitalkameras 18 erfasst. Diese streifenförmigen Bildabschnitte werden sodann wiederum mit Hilfe einer Software (eines Stitching-Programms) zu einem Gesamtbild zusammengesetzt. Vorteilhaft ist hierbei, dass zum Erzielen einer hohen Auflösung nicht die komplette Abbildungsfläche von den Aufnahmefeldern der Digitalkameras 18 abgedeckt sein muss und zu dem die Datenströme wesentlich kleiner sind, da nur Teilaufnahmen durchgeführt werden. Zudem haben die Digitalkameras 18 ausreichend Zeit, um die aufgenommenen Daten zu verarbeiten und abzuspeichern bevor der nächste Arbeitsschritt erfolgt.

Selbstverständlich können anstelle der Digitalkameras 18 auch andere Vorrichtungen zum Digitalisieren der Blätter vorgesehen sein, wie beispielsweise Digitalisierungsbalken, die aus CIS-(Compact Image Sensor) oder CCD (Charged Couple Device)-Modulen bestehen. Auch der Einsatz von herkömmlichen Scanvorrichtungen ist möglich.

Weiters kann die Auflage- bzw. Befestigungsvorrichtung 8 des Buches lediglich einen Teil einer Buchbatterie darstellen, so dass nach dem vollständigen Digitalisieren eines ersten Buches 7 mit Hilfe der Buchbatterie weitere Bücher automatisch einem Digitalisierungsvorgang unterworfen werden können.

Als weiterer vorteilhafter Effekt des Ansaugens der obersten Blätter 10' eines Bündels ergibt sich noch, dass die angesaugten Blätter 10' die Abbildungsflächen 2 während des Hochfahrens der Aufnahmevorrichtung 1 die Abbildungsflächen 2 abstreifen und somit die Abbildungsflächen 2 automatisch gereinigt werden. Des Weiteren wird durch das Durchleiten eines Luftstroms zum Ansaugen der Blätter die in der Aufnahmevorrichtung 1 angeordneten Bauelemente, wie z.B. die Aufnahmeeinheit 19, mit Hilfe des durchgeleiteten Luftstroms ständig gekühlt.

## Patentansprüche

1. Vorrichtung zum optischen Erfassen und Aufnehmen, insbesondere Digitalisieren, von entlang eines Bundes (6) miteinander verbundenen Blättern (10), insbesondere eines Buches (7), mit einer Auflage- bzw. Befestigungsvorrichtung (8) für die Blätter (10) und einer Aufnahmevorrichtung (1), die zwei winkelförmig zueinander angeordnete, eine gemeinsame Scheitelkante (3) aufweisende Abbildungsflächen (2) sowie zumindest eine Aufnahmeeinheit (19) umfasst, wobei die Auflage- bzw. Befestigungsvorrichtung (8) und die Aufnahmevorrichtung (1) zueinander relativ beweglich angeordnet sind, so dass die Scheitelkante (3) der Aufnahmevorrichtung (1) und der Bund (6) der Blätter (10) zusammenführbar sind, **dadurch gekennzeichnet, dass** die Aufnahmevorrichtung (1) eine Öffnung (15, 16) zum Ansaugen mindestens eines Blattes (10') und zur Mitnahme mindestens eines Blattes (10') beim Entfernen der Scheitelkante (3) der Aufnahmevorrichtung (1) vom Bund (6) der Blätter (10) aufweist.

2. Vorrichtung nach Anspruch 1, **dadurch gekennzeichnet, dass** zumindest eine Öffnung (15) zum Ansaugen mindestens eines Blattes (10') im Bereich der Scheitelkante (3) der Abbildungsflächen (2) angeordnet ist.

3. Vorrichtung nach Anspruch 1 oder 2, **dadurch gekennzeichnet, dass** auf den Abbildungsflächen (2) verteilt angeordnete Öffnungen (16) zum Ansaugen mindestens eines Blattes (10') vorgesehen sind.

4. Vorrichtung nach einem der Ansprüche 1 bis 3, **dadurch gekennzeichnet, dass** die Aufnahmevorrichtung (1) linear verschieblich angetrieben ist.

5. Vorrichtung nach einem der Ansprüche 1 bis 4, **dadurch gekennzeichnet, dass** die Auflage- bzw. Befestigungsvorrichtung (8) zwei winkelförmig zueinander angeordnete Platten (8', 14), die vorzugsweise einen Winkel zwischen 50 und 110° einschließen, aufweist.

6. Vorrichtung nach Anspruch 5, **dadurch gekennzeichnet, dass** den Platten eine Einspannvorrichtung (11) zum Einspannen loser Blätter (10) zugeordnet ist, die im eingespannten Zustand durch einen Schlitz (13) zwischen den beiden Platten (14) hindurchgeführt sind.

7. Vorrichtung nach einem der Ansprüche 4 bis 6, **dadurch gekennzeichnet, dass** die Auflage- bzw. Befestigungsvorrichtung (8) an einem senkrecht zur Bewegungsrichtung (5') der Aufnahmevorrichtung (1) verschieblichen Schlitten (9) befestigt ist.

8. Vorrichtung nach einem der Ansprüche 1 bis 7, **dadurch gekennzeichnet, dass** die Aufnahmevorrichtung (1) ein im Wesentlichen geschlossenes Gehäuse (1') aufweist, dessen Wandflächen (2') zumindest teilweise von den Abbildungsflächen (2) gebildet werden, wobei zumindest eine Anschlussöffnung (1") für eine Saug- bzw. Druckleitung vorgesehen ist.

9. Vorrichtung nach Anspruch 8, **dadurch gekennzeichnet, dass** in seitlichen Wandflächen (2, 2') des Gehäuses (1) zumindest jeweils eine verschwenkbare Klappe (21) mit einer Luftöffnung (16) vorgesehen ist.

10. Vorrichtung nach einem der Ansprüche 1 bis 9, **dadurch gekennzeichnet, dass** als Aufnahmeeinheit (19) zumindest eine Digital- und/oder Zeilenkamera (18) vorgesehen ist.

11. Vorrichtung nach Anspruch 10, **dadurch gekennzeichnet, dass** beidseits der Scheitelkante (3) jeweils ein optisches Glasprisma (17) vorgesehen ist, wobei den beiden Glasprismen (17) eine einzige Reihe von Digitalkameras (18) zum Digitalisieren der in den Glasprismen (17) umgelenkten Bilder zugeordnet ist.

12. Verfahren zum optischen Erfassen und Aufnehmen, insbesondere Digitalisieren von entlang eines Bundes (6) miteinander verbundenen Blättern (10), insbesondere eines Buches (7), wobei zum Digitalisieren mittels einer Aufnahmevorrichtung (1), die zwei winkelförmig zueinander angeordnete, eine gemeinsame Scheitelkante (3) aufweisende Abbildungsflächen (2) sowie zumindest eine Aufnahmeeinheit (19) umfasst, die Scheitelkante (3) der Aufnahmevorrichtung (1) und der Bund (6) der Blätter (10) zusammengeführt werden und zum Umblättern die Scheitelkante (3) der Aufnahmevorrichtung (1) vom Bund (6) der Blätter (10) entfernt wird, **dadurch gekennzeichnet, dass** über die Aufnahmevorrichtung (1) zumindest ein Blatt (10') mittels einer Anziehungskraft mitgenommen wird, so dass beim Entfernen der Scheitelkante (3) der Aufnahmevorrichtung (1) vom Bund (6) der Blätter (10) zumindest ein Blatt (10') von den übrigen Blättern (10") vereinzelt wird.

13. Verfahren nach Anspruch 12, **dadurch gekennzeichnet, dass** das Blatt (10') beim Entfernen der Scheitelkante (3) der Aufnahmevorrichtung (1) vom Bund (6) der Blätter (10) angesaugt wird.

14. Verfahren nach Anspruch 12 oder 13, **dadurch gekennzeichnet, dass** jeweils ein Blatt (10') beidseits des Bundes (6) beim Entfernen der Scheitelkante (3) der Aufnahmevorrichtung (1) vom Bund (6) der Blätter (10) von den übrigen Blättern (10") vereinzelt wird.

15. Verfahren nach Anspruch 14, **dadurch gekennzeichnet, dass** während des Entfernens der Scheitelkante (3) der Aufnahmevorrichtung (1) vom Bund (6) der Blätter (10) die mitgenommenen Blätter (10') optisch erfasst und aufgenommen, insbesondere digitalisiert, werden.

16. Verfahren nach Anspruch 14 oder 15, **dadurch gekennzeichnet, dass** die vereinzelten Blätter (10') mittels eines Luftstoßes (20, 20') gemeinsam auf eine Seite des Bundes (6) umgelegt werden.

17. Verfahren nach einem der Ansprüche 12 bis 16, **dadurch gekennzeichnet, dass** während der Annäherung der Scheitelkante (3) der Aufnahmevorrichtung (1) an den Bund (6) der Blätter (10) aus Löchern (15, 16) in den Abbildungsflächen (2) ein Luftsstrom ausgeblasen wird.

## Claims

1. Device for optically detecting and recording, in particular digitising, leaves (10) interconnected along a binding (6), in particular a book (7), comprising a supporting and fixing device (8) for the leaves (10) and a recording device (1) which comprises at least one recording unit (19) and two imaging surfaces (2) that are arranged at an angle to one another and have a common vertex edge (3), the supporting and fixing device (8) and the recording device (1) being arranged so as to move relative to one another such that the vertex edge (3) of the recording device (1) and the binding (6) of the leaves (10) can be brought together, **characterised in that** the recording device (1) has an opening (15, 16) for sucking at least one leaf (10') and for picking up at least one leaf (10') when removing the vertex edge (3) of the recording device (1) from the binding (6) of the leaves (10).

2. Device according to claim 1, **characterised in that** at least one opening (15) for sucking at least one leaf (10') is arranged in the region of the vertex edge (3) of the imaging surfaces (2).

3. Device according to either claim 1 or claim 2, **characterised in that** openings (16) arranged so as to be distributed on the imaging surfaces (2) are provided for sucking at least one leaf (10').

4. Device according to any of claims 1 to 3, **characterised in that** the recording device (1) is driven so as to be linearly displaceable.

5. Device according to any of claims 1 to 4, **characterised in that** the supporting and fixing device (8) has two plates (8', 14) that are arranged at an angle to one another and preferably enclose an angle of between 50 and 110°.

6. Device according to claim 5, **characterised in that** the plates are associated with a clamping device (11) for clamping loose leaves (10), which, in the clamped state, are guided through a slot (13) between the two plates (14).

7. Device according to any of claims 4 to 6, **characterised in that** the supporting and fixing device (8) is fixed to a carriage (9) that can be displaced perpendicularly to the direction (5') of movement of the recording device (1).

8. Device according to any of claims 1 to 7, **characterised in that** the recording device (1) has a substantially closed housing (1'), the wall surfaces (2') of which are formed at least in part by the imaging surfaces (2), at least one connection opening (1") being provided for a suction or pressure line.

9. Device according to claim 8, **characterised in that** at least one pivotable flap (21) having an air opening (16) is provided in each of the lateral wall surfaces (2, 2') of the housing (1).

10. Device according to any of claims 1 to 9, **characterised in that** at least one digital and/or line camera (18) is provided as the recording unit (19).

11. Device according to claim 10, **characterised in that** an optical glass prism (17) is provided on both sides of the vertex edge (3), the two glass prisms (17) being associated with a single row of digital cameras (18) for digitising the images deflected in the glass prisms (17).

12. Method for optically detecting and recording, in particular digitising, leaves (10) interconnected along a binding (6), in particular a book (7), the vertex edge (3) of the recording device (1) and the binding (6) of the leaves (10) being brought together for digitising by means of a recording device (1) which comprises at least one recording unit (19) and two imaging surfaces (2) that are arranged at an angle to one another and have a common vertex edge (3) and the vertex edge (3) of the recording device (1) being removed from the binding (6) of the leaves (10) for turning over, **characterised in that** at least one leaf (10') is picked up by means of an attraction force via the recording device (1) such that, when the vertex edge (3) of the recording device (1) is removed from the binding (6) of the leaves (10), at least one leaf (10') is separated from the remaining leaves (10").

13. Method according to claim 12, **characterised in that** the leaf (10') is sucked when the vertex edge (3) of the recording device (1) is removed from the binding (6) of the leaves (10).

14. Method according to either claim 12 or claim 13, **characterised in that** in each case a leaf (10') is separated from the remaining leaves (10") on both sides of the binding (6) when the vertex edge (3) of the recording device (1) is removed from the binding (6) of the leaves (10).

15. Method according to claim 14, **characterised in that**, while the vertex edge (3) of the recording device (1) is removed from the binding (6) of the leaves (10), the picked-up leaves (10') are optically detected and recorded, in particular digitised.

16. Method according to either claim 14 or claim 15, **characterised in that** the separated leaves (10') are collectively placed on one side of the binding (6) by means of an air blast (20, 20').

17. Method according to any of claims 12 to 16, **characterised in that** an air stream is blown out from holes (15, 16) in the imaging surfaces (2) while the vertex edge (3) of the recording device (1) approaches the binding (6) of the leaves (10).

## Revendications

1. Dispositif de détection et d'enregistrement optiques, en particulier de numérisation, de feuilles (10) reliées les unes aux autres le long d'une marge interne de reliure (6), en particulier d'un livre (7), comprenant un dispositif de support ou de fixation (8) pour les feuilles (10) et un dispositif d'enregistrement (1), qui comporte deux surfaces de reproduction (2) agencées angulairement l'une par rapport à l'autre et présentant une arête de sommet (3) commune, ainsi qu'au moins une unité d'enregistrement (19), dans lequel le dispositif de support ou de fixation (8) et le dispositif d'enregistrement (1) sont agencés de manière à être mobiles l'un par rapport à l'autre, de sorte que l'arête de sommet (3) du dispositif d'enregistrement (1) et la marge interne de reliure (6) des feuilles (10) peuvent être réunies, **caractérisé en ce que** le dispositif d'enregistrement (1) présente une ouverture (15, 16) pour l'aspiration d'au moins une feuille (10') et pour l'entraînement d'au moins une feuille (10') lorsque l'arête de sommet (3) du dispositif d'enregistrement (1) s'éloigne de la marge interne de reliure (6) des feuilles (10) .

2. Dispositif selon la revendication 1, **caractérisé en ce qu'**au moins une ouverture (15) pour l'aspiration d'au moins une feuille (10') est agencée dans la zone de l'arête de sommet (3) des surfaces de reproduction (2).

3. Dispositif selon la revendication 1 ou 2, **caractérisé en ce que** des ouvertures (16) réparties sur les surfaces de reproduction (2) sont prévues pour l'aspiration d'au moins une feuille (10').

4. Dispositif selon l'une quelconque des revendications 1 à 3, **caractérisé en ce que** le dispositif d'enregistrement (1) est entraîné de manière à coulisser linéairement.

5. Dispositif selon l'une quelconque des revendications 1 à 4, **caractérisé en ce que** le dispositif de support ou de fixation (8) comprend deux plaques (8', 14) agencées angulairement l'une par rapport à l'autre, qui forment de préférence un angle compris entre 50° et 110°.

6. Dispositif selon la revendication 5, **caractérisé en ce qu'**un dispositif de serrage (11) destiné au serrage de feuilles (10) volantes qui, une fois serrées, sont guidées à travers une fente (13) entre les deux plaques (14), est associé aux plaques.

7. Dispositif selon l'une quelconque des revendications 4 à 6, **caractérisé en ce que** le dispositif de support ou de fixation (8) est fixé à un chariot (9) pouvant coulisser perpendiculairement à la direction de déplacement (5') du dispositif d'enregistrement (1).

8. Dispositif selon l'une quelconque des revendications 1 à 7, **caractérisé en ce que** le dispositif d'enregistrement (1) présente un boîtier (1') sensiblement fermé, dont les surfaces de paroi (2') sont formées au moins en partie par les surfaces de reproduction (2), dans lequel au moins une ouverture de raccordement (1") pour une conduite d'aspiration ou de pression est prévue.

9. Dispositif selon la revendication 8, **caractérisé en ce qu'**au moins respectivement un clapet (21) pivotant pourvu d'une ouverture d'aération (16) est prévu dans les surfaces latérales de paroi (2, 2') du boîtier (1).

10. Dispositif selon l'une quelconque des revendications 1 à 9, **caractérisé en ce qu'**au moins une caméra numérique et/ou linéaire (18) est prévue comme unité d'enregistrement (19) .

11. Dispositif selon la revendication 10, **caractérisé en ce que** respectivement un prisme de verre optique (17) est prévu de part et d'autre de l'arête de sommet (3), dans lequel une seule rangée de caméras numériques (18) permettant la numérisation des images déviées dans les prismes de verre (17) est associée aux deux prismes de verre (17).

12. Procédé de détection et d'enregistrement optiques, en particulier de numérisation de feuilles (10) reliées les unes aux autres le long d'une marge interne de reliure (6), en particulier d'un livre (7), dans lequel, pour la numérisation au moyen d'un dispositif d'enregistrement (1), qui comporte deux surfaces de reproduction (2) agencées angulairement l'une par rapport à l'autre et présentant une arête de sommet (3) commune, ainsi qu'au moins une unité d'enregistrement (19), l'arête de sommet (3) du dispositif d'enregistrement (1) et la marge interne de reliure (6) des feuilles (10) sont réunies et, pour le changement de page, l'arête de sommet (3) du dispositif d'enregistrement (1) s'éloigne de la marge de reliure interne (6) des feuilles (10), **caractérisé en ce qu'**au moins une feuille (10') est entraînée au moyen d'une force d'attraction au-dessus du dispositif d'enregistrement (1), de sorte que, lorsque l'arête de sommet (3) du dispositif d'enregistrement (1) s'éloigne de la marge interne de reliure (6) des feuilles (10), au moins une feuille (10') est séparée des autres feuilles (10").

13. Procédé selon la revendication 12, **caractérisé en ce que** la feuille (10'), lorsque l'arête de sommet (3) du dispositif d'enregistrement (1) s'éloigne de la marge interne de reliure (6) des feuilles (10), est aspirée.

14. Procédé selon la revendication 12 ou 13, **caractérisé en ce que** respectivement une feuille (10') de part et d'autre de la marge interne de reliure (6), lorsque l'arête de sommet (3) du dispositif d'enregistrement (1) s'éloigne de la marge interne de reliure (6) des feuilles (10), est séparée des autres feuilles (10").

15. Procédé selon la revendication 14, **caractérisé en ce que**, pendant que l'arête de sommet (3) du dispositif d'enregistrement (1) s'éloigne de la marge interne de reliure (6) des feuilles (10), les feuilles (10') entraînées sont détectées et enregistrées optiquement, en particulier numérisées.

16. Procédé selon la revendication 14 ou 15, **caractérisé en ce que** les feuilles (10') séparées sont rabattues conjointement sur une face de la marge interne de reliure (6) au moyen d'un souffle d'air (20, 20').

17. Procédé selon l'une quelconque des revendications 12 à 16, **caractérisé en ce que**, pendant que l'arête de sommet (3) du dispositif d'enregistrement (1) se rapproche de la marge interne de reliure (6) des feuilles (10), un courant d'air est soufflé par des trous (15, 16) ménagés dans les surfaces de reproduction (2).
